# EUROPEAN PATENT APPLICATION

(11) **EP 3 761 057 A1**
(43) Date of publication of application: **06.01.2021**
(21) Application number: 19184149.3
(22) Date of filing: 03.07.2019
(51) Int. Cl.: G01S 15/96, G06Q 50/02

(54) **SYSTEMS AND METHODS FOR GENERATING TRAINING DATASET FOR DISCRIMINATION OF FISH SPECIES**

(71) Applicant: Furuno Electric Co., Ltd., Hyogo 662-8580 (JP)
(72) Inventor: DUBUIS, Jérôme, Nishinomiya, 662-8580 (JP)
(74) Representative: CSY London

(57) **Abstract**

A system and a method (400) are provided for generating training dataset for fish species discrimination is provided. The method (400) comprises receiving 401, by a fish finder, echo data corresponding to one or more first fish schools, assigning 403 identity data to each of the one or more first fish schools, and detecting 405, by a sonar, one or more aquatic objects, the one or more aquatic objects comprising one or more second fish schools. The method (400) further includes assigning 407 the identity data to one or more third fish schools of the detected one or more second fish schools, receiving 409 fish species data corresponding to at least one fish school captured among the one or more third fish schools, and generating 411 the training dataset based on the echo data corresponding to the identity data of the at least one fish school and the received fish species data.

## Description

### TECHNOLOGICAL FIELD

An example embodiment of the present disclosure generally relates to fish species discrimination technology, and more particularly relates to a system and a method for generating training dataset for discrimination of fish species.

### BACKGROUND OF THE INVENTION

Fish finders are generally used for detecting fish schools and for discriminating fish species. Prior to performing of the fish species discrimination, training of a fish species discrimination function of the fish finder is required. Currently, a skipper has to manually recall the echo data corresponding to a fish school that is caught and associate that echo data with other information regarding the caught fish school to generate training dataset for the fish species discrimination function. Due to several reasons, personnel onboard a fishing vessel are engaged in a lot of critical activities and are not able to create records of such training dataset. Due to this, the performance of the fish species discrimination function cannot be optimized.

In rare cases, where the training dataset is actually recorded, the manually generated training dataset has several inconsistencies in it due to human error. For example, the skipper may forget to record the echo data, or the skipper may not be able to correctly recall in the echo data, the fish school that he actually caught. Furthermore, since the current training dataset generation processes are prone to errors, a fish species discrimination function that is trained using such erroneous training dataset may not provide reliable results. Accordingly, there is a need for a system that requires minimal human intervention and generates reliable training dataset for a fish species discrimination function.

### SUMMARY OF THE INVENTION

In order to solve the foregoing problem, one aspect of the present disclosure is to provide a system for generating training dataset for fish species discrimination. The system comprises a fish finder and a sonar communicatively coupled to the fish finder. The fish finder is configured to receive echo data corresponding to one or more first fish schools, assign identity data to each of the one or more first fish schools, and transmit to the sonar, the identity data of each of the one or more first fish schools. The sonar is configured to detect one or more aquatic objects. The one or more aquatic objects comprise one or more second fish schools. The sonar is further configured to assign the identity data to one or more third fish schools of the detected one or more second fish schools, receive, via a user interface, fish species data corresponding to at least one fish school captured among the one or more third fish schools, and transmit the identity data of the at least one fish school and the received fish species data to the fish finder. The fish finder is further configured to generate the training dataset based on the echo data corresponding to the identity data of the at least one fish school and the received fish species data.

In another aspect, a method for generating training dataset for fish species discrimination may be provided. The method includes receiving, by a fish finder, echo data corresponding to one or more first fish schools, assigning identity data to each of the one or more first fish schools, and detecting, by a sonar, one or more aquatic objects. The one or more aquatic objects comprise one or more second fish schools. The method further includes assigning the identity data to one or more third fish schools of the detected one or more second fish schools, receiving fish species data corresponding to at least one fish school captured among the one or more third fish schools, and generating the training dataset based on the echo data corresponding to the identity data of the at least one fish school and the received fish species data.

According to some example embodiments, the fish finder may be further configured to capture location data of each of the one or more first fish schools, and transmit the location data of each of the one or more first fish schools to the sonar.

According to some example embodiments, the location data of each of the one or more first fish schools may comprise latitude and longitude of each of the one or more first fish schools.

According to some example embodiments, the sonar may be further configured to search at least one of the one or more first fish schools in the one or more aquatic objects. According to some example embodiments, the sonar may be further configured to search the at least one of the one or more first fish schools in the one or more aquatic objects based on the location data of each of the one or more first fish schools.

According to some example embodiments, to receive the fish species data, the sonar may be further configured to display the identity data of the one or more third fish schools, and receive, via the user interface, an input corresponding to the at least one fish school to be captured among the one or more third fish schools.

According to some example embodiments, the sonar may be further configured to detect the one or more first fish schools in three dimensions.

According to some example embodiments, the fish finder may be further configured to detect the one or more first fish schools along a vertical direction. The sonar may be further configured to detect the one or more aquatic objects along at least one azimuth direction.

According to some example embodiments, the identity data may comprise one or more of a symbol, a number, a sign, or a letter.

According to some example embodiments, the fish finder may be further configured to store the echo data of each of the one or more first fish schools.

According to some example embodiments, the sonar may be further configured to iteratively associate the identity data, assigned by the sonar, to each of the one or more third fish schools with the associated identity data acting as an input for next iteration. Each iteration may correspond to a 360 degree scan by the sonar.

According to some example embodiments, to generate the training dataset, the fish finder may be further configured to associate the echo data corresponding to the identity data of the at least one fish school and the received fish species data.

The foregoing summary is illustrative only and is not intended to be in any way limiting. In addition to the illustrative aspects, embodiments, and features described above, further aspects, embodiments, and features will become apparent by reference to the drawings and the following detailed description.

### EFFECT(S) OF THE INVENTION

According to this disclosure, a system and a method for generating high quality and reliable training dataset for fish species discrimination may be provided.

### BRIEF DESCRIPTION OF THE DRAWINGS

The present disclosure is illustrated by way of example and not by way of limitation in the figures of the accompanying drawings, in which the like reference numerals indicate like elements and in which:
FIG. 1 is a schematic diagram that exemplarily illustrates a working environment configuration of a system for generating training dataset for fish species discrimination, in accordance with an example embodiment of the present disclosure;
FIG. 2 is a schematic diagram that illustrates a fish finder screen image and a sonar screen image of a system for generating training dataset for fish species discrimination, in accordance with an example embodiment;
FIG. 3 is a block diagram of a system for generating training dataset for fish species discrimination, in accordance with an example embodiment of the present disclosure;
FIG. 4 illustrates a flowchart for implementation of an exemplary method to generate training dataset for fish species discrimination, in accordance with an example embodiment of the present disclosure; and
FIGs. 5A-5C are schematic diagrams of a user interface associated with a system for generating training dataset for fish species discrimination, in accordance with an example embodiment of the present disclosure.

### DETAILED DESCRIPTION OF THE INVENTION

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present invention. Thus, use of any such terms should not be taken to limit the spirit and scope of embodiments of the present invention.

The embodiments are described herein for illustrative purposes and are subject to many variations. It is understood that various omissions and substitutions of equivalents are contemplated as circumstances may suggest or render expedient but are intended to cover the application or implementation without departing from the spirit or the scope of the present disclosure. Further, it is to be understood that the phraseology and terminology employed herein are for the purpose of the description and should not be regarded as limiting. Any heading utilized within this description is for convenience only and has no legal or limiting effect.

As used in this specification and claims, the terms "for example." "For instance." and "such as, and the verbs "comprising," "having." "including." and their other verb forms, when used in conjunction with a listing of one or more components or other items, are each to be construed as open ended, meaning that that the listing is not to be considered as excluding other, additional components or items. Other terms are to be construed using their broadest reasonable meaning unless they are used in a context that requires a different interpretation.

A system and a method provided herein utilize both sonar and fish finder to generate training dataset for fish species discrimination. The system and the method display a caught fish school on a sonar screen. The system and the method require minimal human intervention, thereby reducing errors due to human intervention. The system and the method use the sonar and the fish finder in a collaborative manner to improve precision and reliability of the generated training dataset for fish species discrimination. Further, the system and the method provided herein lead to enhancement in the performance of fish species discrimination functions.

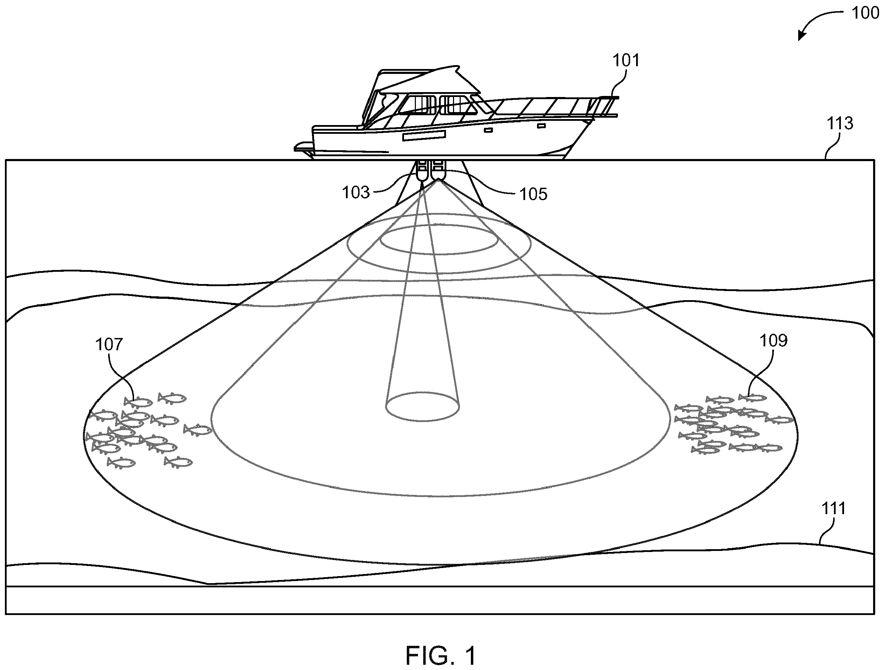

FIG. 1 is a schematic diagram that exemplarily illustrates a working environment configuration 100 of a system for generating training dataset for fish species discrimination, in accordance with an example embodiment. A watercraft 101 may comprise a fish finder 103 and a sonar 105 for detecting fish schools 107, 109. A fish finder transducer of the fish finder 103 and a sonar transducer of the sonar 105 may be disposed at bottom of the watercraft 101 in any configuration suitable for detection of the fish schools 107, 109. Each of the fish finder transducer and the sonar transducer may transit transmission waves into the water and receive reflected waves from aquatic objects inside the water. The reflected waves may also be referred to as "echoes". The fish finder 103 and the sonar 105 may be communicatively coupled to each other through communication and control channels.

The watercraft 101 may be any vehicle, capable of traversing in or on surface of a water body, such as a ship, a boat, a hovercraft, a submarine or the like. Hereinafter, the watercraft 101 equipped with the fish finder 103 and the sonar 105 may be referred to as a 'vessel'. The fish schools 107, 109, may be a group of fish swimming in a same direction in a coordinated manner. Fish species of the fish school 107 may be different from fish species of the fish school 109. In some example embodiments, fish species of both the fish schools 107, 109 may be same. The seabed 111 may refer to bottom or floor of a waterbody 113. The waterbody 113 may be a part of an ocean, a sea, a lake, a pond, a river, or a reservoir.

The fish finder 103 may comprise a transmitting circuit, a receiving circuit, a transducer (for example the fish finder transducer), a processing unit, and a display unit. The transmitting circuit may generate a transmission signal converted into sonic or ultrasonic waves by the transducer. The transducer may receive reflected waves which are converted into a reception signal. The receiving circuit may amplify, A/D convert and filter the reception signal. The reception signal thus processed by the receiving circuit may also be referred to as echo data. The processing unit may perform signal processing on the echo data and the processed echo data may be displayed on the display unit.

The sonar 105 may be realized by one or more of a main display unit, a transceiver unit, a processing unit, and a hull unit with a transducer mounted. The sonar 105 may comprise a control mechanism to move the transducer in vertical direction.

The fish finder transducer may be disposed at the bottom surface of the vessel 101 such that the fish finder 103 transmits waves towards the seabed 111 and receives reflections or echoes of the transmitted waves. The transmission of each wave and reception of its reflected wave (echo) may be in succession and such a transmit-receive cycle may be referred to as a ping. The fish finder 103 may be configured to capture the echo data from a fish school and perform detection of the fish school using the received echo data. Towards this end, the fish finder 103 may display on a screen the detected fish school(s).

In some example embodiments, the fish finder 103 may search at least one of the fish schools 107, 109 vertically below the vessel 101 by transmitting a wave or beam towards the seabed 111. The fish finder 103 may receive echo data corresponding to the fish schools 107, 109. Echo data that connect in ping direction for several successive pings may confirm detection of a fish school. Echo data of each of the fish schools 107, 109 may be stored in the fish finder 103. The fish finder 103 may thus detect the fish schools 107, 109 using the echo data. A detection range of the fish finder 103 may extend along a vertical direction below the vessel 101.

The sonar transducer may also be disposed at the bottom surface of the vessel 101 such that the sonar 105 transmits waves and receives their reflections along the azimuth direction. Thus, the sonar 105 may search in both horizontal and vertical directions below the vessel 101. In some example embodiments, the sonar 105 may be a three dimensional (3D) sonar that can perform three-dimensional detection of one or more aquatic objects. The sonar 105 may receive echoes from the aquatic objects and may analyse the echoes to perform detection of the one or more aquatic objects. The one or more aquatic objects may include fish schools, icebergs, sunken watercraft and the like. In some example embodiments, echo data that connect in azimuth direction for several successive azimuth angles may be considered as a fish school by the sonar 105. A detection range of the sonar 105 may extend along at least one azimuth direction.

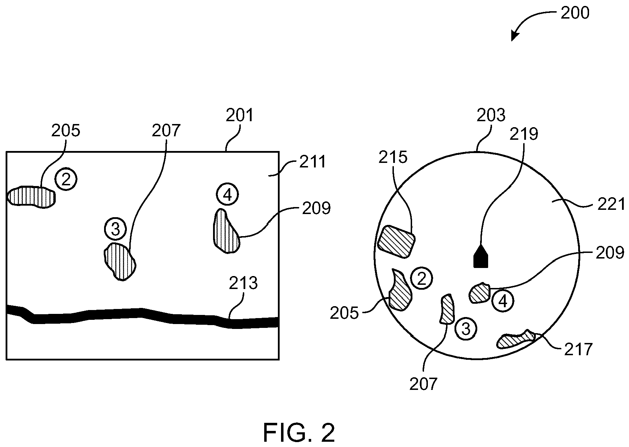

The detection performed by each of the fish finder 103 and the sonar 105 may be presented to the skipper on one or more display screens. In some example embodiments, each of the fish finder 103 and the sonar 105 may each comprise a display screen for displaying the detected fish school or aquatic objects. A detailed description regarding the display of images on the display screen of each of the fish finder 103 and the sonar 105 is provided next with reference to FIG. 2.

FIG. 2 is a schematic diagram that illustrates a fish finder screen image 201 of the display screen associated with the fish finder 103 and a sonar screen image 203 of the display screen associated with the sonar 105 of the system for generating training dataset for fish species discrimination, in accordance with an example embodiment. A plurality of fish schools 205, 207, 209, and 217 may be present in the water body near the vessel. The fish finder may receive echo data corresponding to one or more fish schools and detect the one or more fish schools. Hereinafter, the fish schools detected by the fish finder may also be referred to as 'one or more first fish schools'. The sonar may perform a separate detection of aquatic objects underneath the vessel. The aquatic objects may include some or all of the fish schools 205, 207, 209, and 217. The aquatic objects detected by the sonar may include at least one fish school of the fish schools detected by the fish finder. Hereinafter, the fish schools detected by the sonar may also be referred to as 'one or more second fish schools'.

In some example embodiments, the fish finder may detect fish schools 205, 207, and 209 and display them on the display screen 211. Further, the seabed 213 may also be displayed on the screen 211.

The fish finder may assign identity data to each of the detected fish schools 205, 207, and 209. The identity data may be any symbol such as a number, a sign, a letter or a combination thereof. The identity data assigned to each of the fish schools 205, 207, 209 may be different from each other. Hereinafter, the phrases "identity data" and "identity number" may be used interchangeably. In the example embodiment, the fish finder may assign identity numbers 2, 3, 4 to each of the first fish schools 205, 207, 209, respectively. The identity numbers 2, 3, 4 may be displayed on the screen 211 along with a graphical representation of the detected fish schools 205, 207, 209. In some example embodiments, the fish finder may assign the identity numbers 2, 3, 4 to the detected fish schools 205, 207, 209 but only the graphical representation of the detected fish schools 205, 207, 209 may be displayed on the screen 211. The fish finder may also capture location data of each of the fish schools 205, 207, 209. The fish finder may store the echo data and the location data of each of the fish schools 205, 207, 209 in one or more databases or any other suitable storage medium. The location data of each of the fish schools 205, 207, 209 may comprise geo-coordinates, and/or latitude and longitude of each of the fish schools 205, 207, 209. The fish finder may transmit the identity data and location data of each of the fish schools 205, 207, 209 to the sonar.

The sonar may detect one or more aquatic objects within a detection range from the vessel. In some example embodiments, the sonar may detect aquatic objects such as fish schools 205, 207, 209, and 217, and debris 215. The debris 215 may be a rock, a sunken ship or boat, or any other submerged object from which waves transmitted by the sonar may be reflected. In some example embodiments, the sonar may detect fewer or more aquatic objects. The detected one or more aquatic objects may be displayed on the screen 221. In some example embodiments, the vessel 219 may also be displayed by the sonar on the screen 221. At least one fish school (such as 205, 207 or 209) may be common to the one or more detected first fish schools of the fish finder and the one or more detected second fish schools of the sonar. Hereinafter, the at least one fish school which is commonly detected by the fish finder and the sonar may also be referred to as 'one or more third fish schools'.

The sonar may receive from the fish finder, the identity data and the location of each of the fish schools detected by the fish finder (i.e. 205, 207, and 209). In response to receiving the identity data and location data of each of the fish schools 205, 207, and 209, the sonar may search the fish schools (205, 207, 209) in the detected aquatic objects (205, 207, 209, 215, 217) to obtain the fish schools that are common. The sonar may search based on the received location data of each of the fish schools (205, 207, 209). In the example depicted in FIG. 2, the sonar may determine that fish schools 205, 207, and 209 are commonly detected. A fish school closest to the location indicated in the location data of each of the fish schools 205, 207, and 209 may be assigned the corresponding identity data associated with the respective one of the fish schools 205, 207, and 209.

In an alternate example embodiment, the sonar may be a three dimensional sonar. The three dimensional sonar may provide a three dimensional view of water below the vessel 219. The fish finder may transmit, to the three dimensional sonar, location data and depth data of each of the fish schools 205, 207, and 209. In response to receiving the location data and the depth data of each of the fish schools 205, 207, and 209, the three dimensional sonar may search for each of the fish schools 205, 207, 209 in the aquatic objects 205, 207, 209, 215, and 217, and determine that the fish schools 205, 207 and 209 are commonly detected by the fish finder and the sonar. The sonar may perform the search based on the received location data and the depth data of each of the fish schools 205, 207, 209. A fish school among the fish schools detected by the sonar that is closest in terms of location and depth with respect to any of the fish schools detected by the fish finder may be assigned with the identity data associated with the corresponding one of the fish schools 205, 207, and 209. In this way, the depth data of each of the fish schools 205, 207, and 209 may be utilized by the three dimensional sonar to enhance the precision of determining the common fish schools among the fish schools detected by the fish finder and the aquatic objects detected by the sonar.

The sonar may determine the identity numbers of the fish schools 205, 207, and 209 from the received identity data. The sonar may further assign the identity numbers 2, 3, 4 of the fish schools detected by the fish finder, to each of the commonly detected fish schools 205, 207, and 209 and may display the assigned identity numbers of the commonly detected fish schools 205, 207, and 209 on the sonar screen 221. The sonar may refresh the sonar screen image 203 post each 360 degree scan. As the commonly detected fish schools (205, 207, 209) may be moving relative to the vessel, each of the commonly detected fish schools (205, 207, 209) on the screen 221 may be displayed at a slightly different location post each 360 degree scan by the sonar. The sonar may re-associate the identity numbers (2, 3, 4) to each of the commonly detected fish schools 205, 207, and 209 respectively, post each 360 degree scan by the sonar. A fish school closest to the location indicated in the location data of each of the fish schools 205, 207, and 209 in previous 360 degree scan may be assigned the corresponding identity data associated with the respective one of the fish schools 205, 207, and 209.

The fish school 217 may be detected by the sonar but not by the fish finder. The sonar may thus display, on the screen 221, the fish school 217 without any identity number. This may be done to help the user distinguish between the commonly detected fish schools 205, 207, and 209 with the identity numbers and the fish school 217 without any identity number. The sonar may be provided with a user interface that may be integrated with the display screen 221 to display the identity data of each of the commonly detected fish schools 205, 207, 209 and receive an input corresponding to at least one fish school, to be captured, among the commonly detected fish schools 205, 207, and 209. In some example embodiments, the user interface may be distinct and separate from the display screen 221. In one example embodiment, the skipper may intend to catch the fish school 205. The skipper may select the identity number 2 associated with the fish school 205. In response to the input from the skipper, the user interface may output a message confirming the selection of the skipper. For example, the user interface may display a message "CATCH THIS SCHOOL?" with two selectable options "YES" and "NO" to confirm the selection by the skipper. Further, the skipper may click on the "YES" option corresponding to the selection of the fish school 205 and may proceed to catch the fish school 205.

In response to receiving the confirmation regarding the indication of which fish school is intended to be caught, the user interface may display a message "WHICH SPECIES DID YOU CATCH?" along with an input window to obtain fish species data regarding the fish school 205 that is caught by the skipper. The skipper may provide the fish species information in the input window by manually typing. In some example embodiments, any other suitable input means such as drop down selection, voice input and the like may be utilized by the skipper to enter the fish species data. The fish species data may include name of fish species of the fish school 205. There may be a gap of several minutes to several hours between the skipper's input regarding the confirmation of the selection of the fish school to be caught and the input of the fish species data. In response to receiving the fish species data, the sonar may transmit the identity number 2 of the fish school 205 and the received fish species data to the fish finder.

The fish school 217 (without any identity number) may not be provided with the catch option. As a result of this, the fish school 217 may not contribute in generating the training dataset for fish species discrimination.

Although in the above example embodiment, it has been described that the sonar includes the user interface, in some alternate embodiments, both the fish finder and the sonar may be provided with a respective user interface. For example, the sonar may comprise a first user interface and the fish finder may comprise the second user interface. The first user interface may enable the skipper to select the identity number 2 associated with the fish school 205 to indicate that the fish school 205 is intended to be caught by the skipper. Further, the skipper may confirm the indication of the fish school (205) to be caught by providing a confirmation input (for example by clicking on the "YES" option) on the first user interface. In response to receiving the confirmation input via the first user interface, the sonar may send a triggering message to the fish finder to display an input window to receive the fish species data corresponding to the fish school 205 from the skipper. In response to receiving the triggering message, the fish finder may control the second user interface to display the input window with the message "WHICH SPECIES DID YOU CATCH?" and receive, from the skipper via the second user interface, the fish species data corresponding to the fish school 205.

The fish finder may extract the stored echo data corresponding to the identity number 2 of the fish school 205. The fish finder may associate the echo data corresponding to the identity number 2 of the fish school 205 with the received fish species data of the fish school 205 to generate the training dataset. Alternately, the fish finder may transmit the extracted echo data corresponding to the identity number 2 of the fish school 205 and the received fish species data of the fish school 205 to an external computing machine (for example a cloud hosted server). The external computing machine may in turn associate the echo data with the fish species data to generate the training dataset and transmit the generated training dataset to the fish finder for fish species discrimination. In some example embodiments, the sonar may receive the echo data corresponding to the identity number 2 of the fish school 205 and associate the echo data with the fish species data of the fish school 205 to generate the training data set. The sonar may further transmit the generated training dataset to the fish finder for fish species discrimination. In this way, a rich repository of training dataset may be generated for training a fish discrimination function of the fish finder in an intuitive manner.

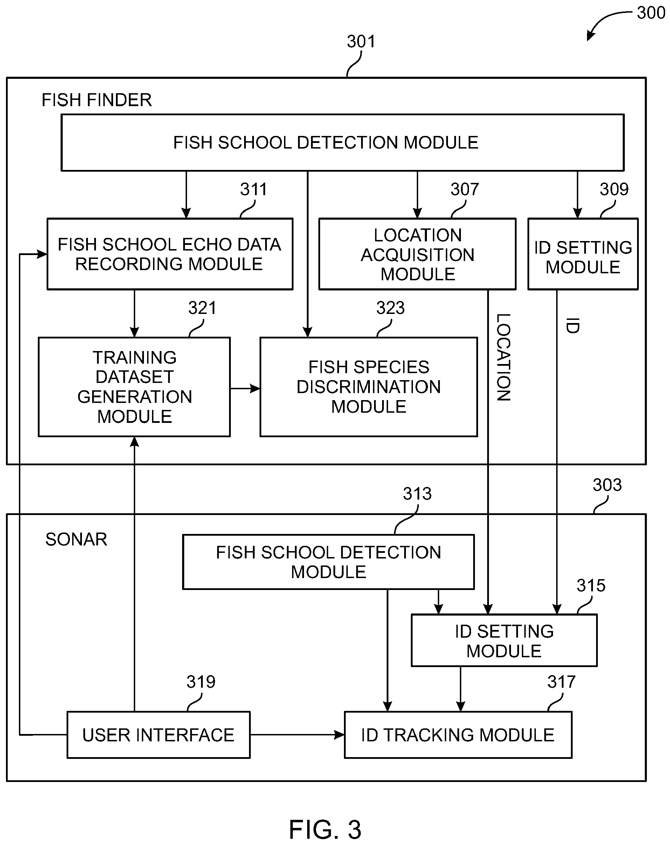

FIG. 3 is a block diagram of a system 300 for generating training dataset for fish species discrimination, in accordance with an example embodiment. The system 300 may comprise a fish finder 301 and a sonar 303. The fish finder 301 may comprise a fish school detection module 305, a location acquisition module 307, an ID setting module 309, a fish school echo data recording module 311, a training dataset generation module 321 and a fish species discrimination module 323. The sonar 303 may comprise a fish school detection module 313, an ID setting module 315, an ID tracking module 317, and a user interface 319.

Each of the fish school detection module 305, the ID setting module 309, the training dataset generation module 321, the fish species discrimination module 323, the fish school detection module 313, the ID setting module 315 and the ID tracking module 317 may be realized using one or more processors and corresponding memory storing computer executable instructions. The one or more processors may be embodied in a number of different ways. For example, the one or more processors may be embodied as one or more of various hardware processing means such as a coprocessor, a microprocessor, a microcontroller unit (MCU), a special-purpose computer chip, or the like. The memory may be non-transitory and may include, for example, one or more volatile and/or non-volatile memories.

Each of the location acquisition module 307 and the fish school echo data recording module 311 may comprise a storage device such as a database.

The user interface 319 may include a touch screen display and, in some embodiments, may additionally or alternately also include a keyboard, a mouse, a joystick, touch areas, soft keys, one or more microphones, a plurality of speakers, or other input/output mechanisms. In one embodiment, the user interface 319 may be configured to control at least some functions of one or more user interface elements such as a display and, in some embodiments, a plurality of speakers, a ringer and/or the like. The user interface 319 may comprise one of a resistive type or a capacitive type touch surface.

The fish school detection module 305 may receive echo data of one or more first fish schools. The fish school detection module 305 may transmit echo data of each of one or more first fish schools to fish school echo data recording module 311. The fish school echo data recording module 311 may store the received echo data. In some example embodiments, the fish school echo data recording module 311 may be a database. The fish school echo data recording module 311 may store the received echo data in a format that facilitates updating, maintenance, and development. The fish school echo data recording module 311 may be enabled with processing means and communication means. The processing means may fetch echo data from the echo database and transmit the same to the training dataset generation module 321.

The ID setting module 309 may assign identity data to each of the one or more detected first fish schools. The one or more detected first fish schools may be displayed on a fish finder screen. The identity data associated with each of the one or more first fish schools may be displayed on the fish finder screen. In some example embodiments, the identity data may not be displayed on the fish finder screen. The fish school detection module 305 may be communicatively coupled to a positioning system (e.g. GPS, Galileo, BeiDou, or GLONASS receiver) to determine location of each of the one or more first fish schools. The location of each of the one or more first fish schools comprises geo-coordinates and/or latitude and longitude of each of the one or more first fish schools. The fish school detection module 305 may send the location of each of the one or more first fish schools to the location acquisition module 307. The location acquisition module 307 may store the received location of each of the one or more first fish schools. The identity data and the location of each of the one or more first fish schools may be transmitted to the ID setting module 315.

The fish school detection module 313 may be configured to detect one or more aquatic objects. Further, the fish school detection module 313 may search at least one of the one or more first fish schools in the one or more aquatic objects. The one or more aquatic objects may be displayed on a sonar screen. The ID setting module 315 may assign the identity data, same as assigned by the ID setting module 309, to each of the commonly detected fish schools.

The sonar 303 may refresh sonar screen image post each 360 degree scan by the sonar 303. As the commonly detected fish schools are moving, each of the commonly detected fish schools on the sonar screen may be displayed at a slightly different location post each 360 degree scan by the sonar 303. The identity data assigned to each of the commonly detected fish schools must remain same after each 360 degree scan by the sonar 303. The ID tracking module 317 may re-associate the identity data to each of the commonly detected fish school, post each 360 degree scan by the sonar 303.

The user interface 319 may receive, identity data corresponding to at least one fish school which the skipper intends to catch. The user interface 319 may also receive, from the skipper, fish species data corresponding to the at least one fish school. The user interface 319 may transmit, to the fish school echo data recording module 311, the identity data corresponding to the at least one fish school that is caught. The user interface 319 may transmit the received fish species data to the training dataset generation module 321. The fish school echo data recording module 311 may extract echo data corresponding to the identity data of the caught fish school. Further, the fish school echo data recording module 311 may transmit the extracted echo data to the training dataset generation module 321. The training dataset generation module 321 may generate the training dataset by associating the echo data corresponding to the identity data of the at least one fish school caught with the received fish species data. The training dataset generation module 321 may feed the generated training dataset to the fish species discrimination module 323. The fish species discrimination module 323 may train or retrain a fish species discrimination algorithm based on the generated training dataset and the fish species discrimination module 323 may discriminate echo data captured on subsequent pings based on the trained or retrained discrimination algorithm.

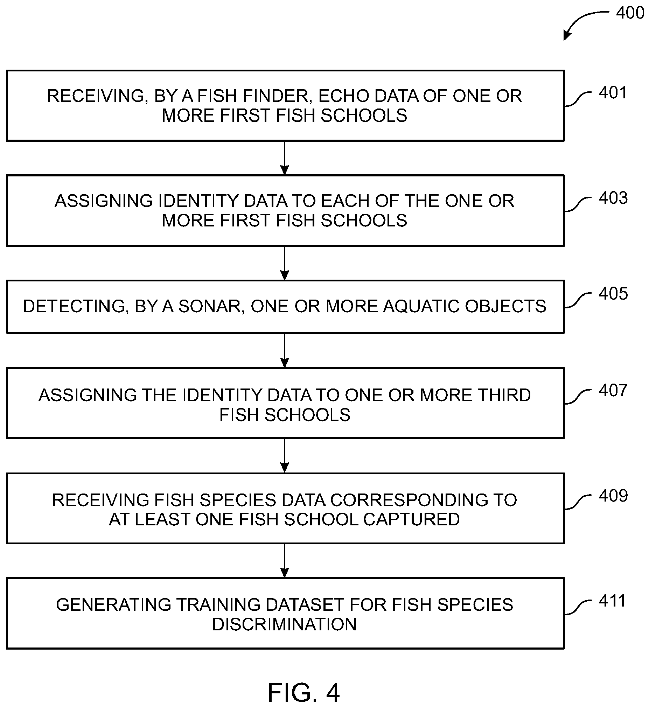

FIG. 4 illustrates a flowchart for implementation of an exemplary method to generate training dataset for fish species discrimination, in accordance with an example embodiment. It will be understood that each block of the flowchart and combination of blocks in the flowchart may be implemented by various means, such as hardware, firmware, processor, circuitry, and/or other communication devices associated with execution of software including one or more computer program instructions. Accordingly, blocks of the flowcharts support combinations of means for performing the specified functions and combinations of operations for performing the specified functions.

The method 400 for generating the training dataset for fish species discrimination may include, at 401, receiving, by a fish finder, echo data of one or more first fish schools and detecting the one or more first fish schools based on the received echo data. At 403, the method may include assigning identity data to each of the one or more detected first fish schools. The identity data may be a number, a sign, a letter or a combination thereof. The identity data assigned to each of the one or more first fish school may be different from each other. The identity data may be transmitted to a sonar.

At 405, the method may include detecting, by the sonar one or more aquatic objects. The one or more aquatic objects may include one or more second fish schools. The sonar may search at least one of the one or more first fish schools in the one or more aquatic objects. At least one fish school may be common between the fish schools detected by the fish finder and the fish schools detected by the sonar. At 407, the method may include assigning the identity data to each of the commonly detected fish schools. The sonar may refresh a sonar screen image post each 360 degree scan by the sonar. As the one or more first fish schools are moving, each of the commonly detected fish schools on a sonar screen may be displayed at a slightly different location post each 360 degree scan by the sonar. The identity data assigned to each of the one or more third fish schools must remain same after each 360 degree scan by the sonar.

At 409, the method may include receiving fish species data corresponding to at least one fish school captured among the commonly detected fish schools, via a user interface. The fish species data may include name of fish species of the fish school. The receiving of the fish species data comprises displaying the identity data of each of the searched one or more first fish schools and receiving, via the user interface, an input corresponding to the at least one fish school to be captured among the commonly detected fish schools. The input may correspond to identity number associated with the at least one fish school. The identity data of the at least one captured fish school and the received fish species data may be transmitted to the fish finder. At 411, the method may include generating the training dataset for the fish species discrimination based on the echo data corresponding to the identity data of the at least one captured fish school and the received fish species data.

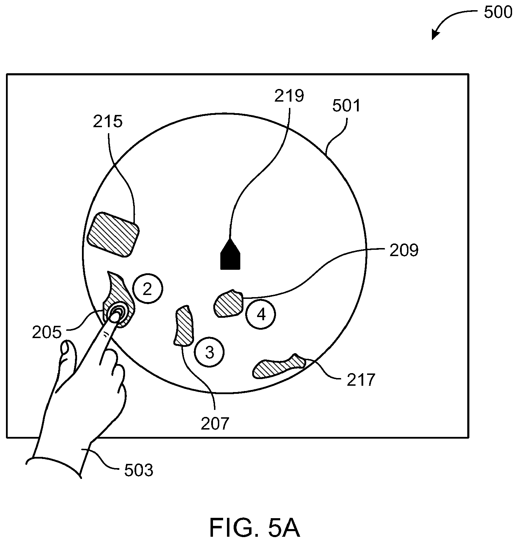

FIGs. 5A-5C are schematic diagrams of a user interface associated with a system for generating training dataset for fish species discrimination, in accordance with an example embodiment. The user interface may be similar to the one described with reference to FIG. 2. Hereinafter, the example embodiments of the user interface in each of FIGs. 5A-5C may be described with reference to the description of FIG. 2.

FIG. 5A illustrates a display of the user interface 500 for selecting at least one fish school that the skipper intends to catch. The sonar may detect one or more aquatic objects (205, 207, 209, 215, 217) within the detection range boundary 501 of the sonar. The user interface 500 may be integrated with a display screen such as the display screen 221 of FIG. 2. As such the user interface 500 may display a graphical representation of each of the detected aquatic objects (205, 207, 209, 215, 217) and the vessel 219. The aquatic objects (205, 207, 209, 215, 217) may comprise fish schools 205 207, 209, and 217 and debris 215. The user interface 500 may receive identity data corresponding to at least one fish school among the detected fish schools 205, 207, 209, and 217 and display the identity data of the at least one fish school. A skipper 503 may provide a selection input to indicate the fish school to be caught by any suitable gesture such as a touch, tap, hold, or drag input on the user interface 500. For example, as is shown in FIG. 5A, the skipper 503 may provide a touch input on the graphical representation of the fish school 205 to indicate that the fish school 205 is intended to be caught. In some example embodiments, the skipper 503 may provide the selection input through a non-touch gesture such as by using a mouse, keypad, button, or through a voice input. For this, the user interface 500 may be equipped with appropriate additional input mechanisms.

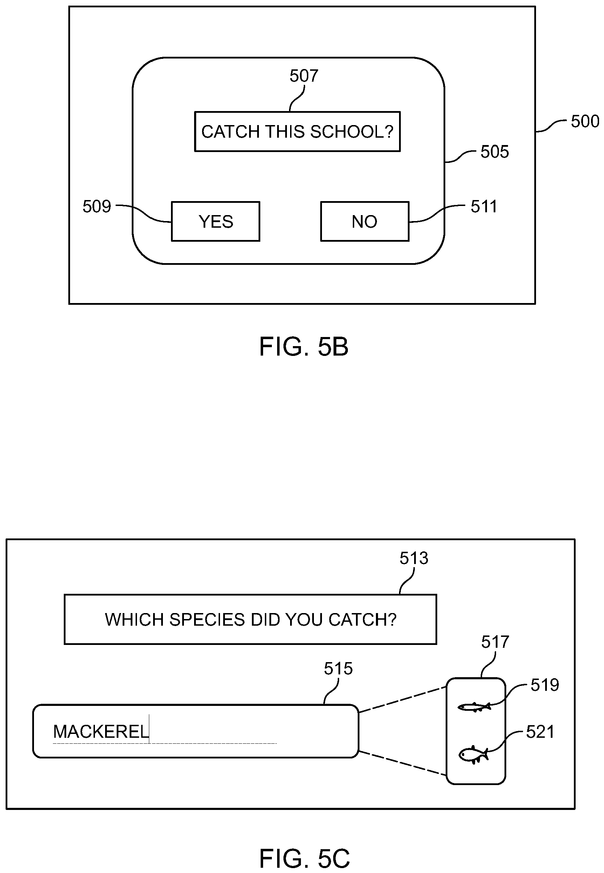

FIG. 5B illustrates a display of the user interface 500 to display a confirmation message for the selection input. Succeeding the reception of the selection input from the skipper, the user interface 500 may display a pop-up menu 505. The pop-up menu 505 may include a message 507 "CATCH THIS SCHOOL?" and option 509 "YES" and option 511 "NO". The pop-up menu 505 may be displayed to receive confirmation on the selection input (for example in this case a selection of the fish school 205) described with reference to FIG. 5A. The user interface 500 may receive the confirmation data 'not to catch' the fish school 205 when the skipper taps on the option 511 'NO' displayed in the pop-up menu 505. In response to receiving a confirmation indicating 'not to catch' the fish school 205, the user interface 500 of FIG. 2 may stop the display of the pop-up menu 505 and revert to the display of information displayed in the user interface 500 of FIG 5A, for receiving a selection of at least one fish school which the skipper intends to catch. The skipper may then indicate another fish school as the intended fish school to be caught.

Alternately, the user interface 500 may receive the confirmation data 'to catch' the fish school 205 when the skipper taps on the option 509 "YES" displayed in the pop-up menu 505. After providing the confirmation input by tapping the option 509 "YES", the skipper may proceed to catching the fish school 205. In response to receiving the above mentioned confirmation input on the selection input, the user interface 500 may display a query message to obtain fish species regarding the fish school caught by the skipper. This is described next with reference to FIG. 5C.

FIG. 5C illustrates a display of the user interface 500 to receive fish species data corresponding to the fish school caught by the skipper. In response to receiving the confirmation on the selection input, the user interface 500 may display a query message "WHICH SPECIES DID YOU CATCH?" to obtain fish species data regarding the fish school 205 that is caught by the skipper. The user interface 500 may also display an input window 515 to allow the skipper to enter the fish species data regarding the fish school 205 that is caught by the skipper. The skipper may enter in the input window 515, the fish species data corresponding to the fish school 205. For example, the skipper may type the name of the fish species in the input window 515 to provide the fish species data.

In some example embodiments, several fish species may have similar names and to allow the skipper to enter the correct species name, the user interface 500 may intuitively suggest names of fish species that are similar to the string entered by the skipper. For example, the user interface 500 may dynamically process the character string entered by the skipper in the input window 515 and query a database to fetch fish species names that include the character string entered by the skipper. Additionally or alternately, the user interface 500 may display images or other information of fish species whose names include the search string entered by the user. For example, as is depicted in FIG. 5C, the skipper may enter the string "MACKEREL" in the input window 515. In response, the user interface may query a database using the string to fetch images of fish species whose names include the string "MACKEREL". The user interface 500 may for example display in an image window 517, fish species images 519 and 521, whose names include the string "MACKEREL". The skipper may thus identify the fish school that is caught from the images 519 and 521 and correspondingly enter the correct fish species data of the fish school that is actually caught. The user interface 500 may thus receive from the input window 515, the fish species data corresponding to the fish school 205 actually caught by the skipper. The fish species data may, for example, include one or more of species name, common names, morphology, habitat information, dimensions of the fish species of the fish school 205.

Example embodiments of the present disclosure may thus provide for generation of a reliable dataset for training a fish discrimination function of the fish finder. The training of the fish discrimination function using the reliable dataset generated by combination of the fish finder and the sonar may provide a highly effective automatic means for discriminating fish species. Therefore, example embodiments of the present disclosure may lead to an improved fish finder that can discriminate among fish species effectively.

Many modifications and other embodiments of the inventions set forth herein will come to mind of one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A system for generating training dataset for discrimination of fish species, the system comprising:
a fish finder (103); and
a sonar (105) communicatively coupled to the fish finder,
wherein the fish finder (103) is configured to:
receive echo data corresponding to one or more first fish schools;
assign identity data to each of the one or more first fish schools; and
transmit to the sonar (105), the identity data of each of the one or more first fish schools;
wherein the sonar (105) is configured to:
detect one or more aquatic objects, wherein the one or more aquatic objects comprise one or more second fish schools;
assign the identity data to one or more third fish schools of the detected one or more second fish schools;
receive, via a user interface, fish species data corresponding to at least one fish school captured among the one or more third fish schools; and
transmit the identity data of the at least one fish school and the received fish species data to the fish finder (103);
wherein the fish finder (103) is further configured to generate the training dataset based on the echo data corresponding to the identity data of the at least one fish school and the received fish species data.

2. The system of claim 1, wherein the fish finder (103) is further configured to:
capture location data of each of the one or more first fish schools; and
transmit the location data of each of the one or more first fish schools to the sonar (105).

3. The system of claim 2, wherein the location data of each of the one or more first fish schools comprises latitude and longitude of each of the one or more first fish schools.

4. The system of any one of the preceding claims, wherein the sonar (105) is further configured to search at least one of the one or more first fish schools in the one or more aquatic objects.

5. The system of claim 2, wherein the sonar (105) is further configured to search at least one of the one or more first fish schools in the one or more aquatic objects, based on the location data of each of the one or more first fish schools.

6. The system of any one of the preceding claims, wherein to receive the fish species data, the sonar (105) is further configured to:
display the identity data of the one or more third fish schools; and
receive, via the user interface, an input corresponding to the at least one fish school to be captured among the one or more third fish schools.

7. The system of any one of the preceding claims, wherein the sonar (105) is further configured to detect the one or more aquatic objects in three dimensions.

8. The system of any of the preceding claims, wherein:
the fish finder (103) is further configured to detect the one or more first fish schools along a vertical direction; and
the sonar (105) is configured to detect the one or more aquatic objects along at least one azimuth direction.

9. The system of any one of the preceding claims, wherein the identity data comprises one or more of a symbol, a number, a sign, or a letter.

10. The system of any one of the preceding claims, wherein the fish finder (103) is further configured to store the echo data of each of the one or more first fish schools.

11. The system of any one of the preceding claims, wherein the sonar (105) is further configured to iteratively associate the identity data, assigned by the sonar, to each of the one or more third fish schools with the associated identity data acting as an input for next iteration, wherein each iteration corresponds to a 360 degree scan by the sonar.

12. The system of any one of the preceding claims, wherein to generate the training dataset, the fish finder (103) is further configured to associate the echo data corresponding to the identity data of the at least one fish school and the received fish species data.

13. A method (400) for generating training dataset for fish species discrimination, comprising:
receiving (401), by a fish finder, echo data corresponding to one or more first fish schools;
assigning (403) identity data to each of the one or more first fish schools;
detecting (405), by a sonar, one or more aquatic objects, wherein the one or more aquatic objects comprise one or more second fish schools;
assigning (407) the identity data to one or more third fish schools of the detected one or more second fish schools;
receiving (409) fish species data corresponding to at least one fish school captured among the one or more third fish schools; and
generating (411) the training dataset based on the echo data corresponding to the identity data of the at least one fish school and the received fish species data.
